# EUROPEAN PATENT APPLICATION

(11) **EP 2 023 437 A1**
(43) Date of publication of application: **11.02.2009**
(21) Application number: 06747013.8
(22) Date of filing: 30.05.2006
(51) Int. Cl.: H01Q 1/24, H01Q 3/24, H01Q 9/44, H04B 1/38, H04B 7/10

(54) **PORTABLE WIRELESS UNIT**

(71) Applicant: Panasonic Corporation, Kadoma-shi Osaka 571-8501 (JP)
(72) Inventor: TAKAGI, Kenji, Osaka 540-6207 (JP); TAKAHASHI, Tsukasa, Osaka 540-6207 (JP); SAITOH, Yutaka, Osaka 540-6207 (JP); NAGANO, Kenya, Osaka 540-6207 (JP)
(74) Representative: Grünecker, Kinkeldey, Stockmair & Schwanhäusser Anwaltssozietät
(86) International application number: PCT/JP2006/310785
(87) International publication number: WO 2007/138682

(57) **Abstract**

A purpose of the present invention is to provide a portable wireless unit capable of suppressing a deterioration of antenna performance, which is caused by electromagnetic mutual effects occurred between two antenna elements, and capable of achieving an improving effect of a high diversity gain, and also capable of realizing a designing characteristic and an operative characteristic in a compatible manner. While an upper case (1) and a lower case (2) are coupled to each other by a hinge portion (3), a circuit board (8) is arranged on the lower case (2), and also, a power feeding element (7) and another power feeding element (20) are arranged in such a separation manner that an interval between these power feeding terminals (7) and (20) is longer than, or equal to "λ/20" on the circuit board (8). Also, while a whip antenna (9) is provided on the lower case (2), this whip antenna (9) is connected via the power feeding terminal (7) to the circuit board (8). Also, while a metal frame (13) is provided on the upper case (1), this metal frame (13) is connected via the hinge portion (3) and the power supply terminal (20) to the circuit board (8). Then, a dipole antenna is constituted by the metal frame (12) and a ground pattern of the circuit board (8) in combination with the hinge portion (3). A diversity receiving operation is carried out based upon antenna outputs of this dipole antenna and the whip antenna (9).

## Description

### Technical Field

The present invention is related to a portable wireless unit. More specifically, the present invention is related to a portable wireless unit, the housing of which can be folded.

### Background Art

Conventionally, in portable wireless units which are typically known as portable telephones, diversity techniques have been conducted in order to reduce deteriorations of transmission qualities under fading environments. As diversity antenna systems mounted on conventional portable wireless units, such structural arrangements that two antenna elements have been mounted on housings of portable telephones are known (refer to, for instance, patent publication 1). Also, as antennas to be mounted on portable wireless units having such housing structures that two sets of housings can be pivotably coupled to each other by two pieces of different shafts, such structural arrangements that the housings and circuit boards are operated as dipole antennas are known (refer to, for instance, patent publication 2).

In the above-described diversity antenna systems, two pieces of antenna elements are mounted on a small housing, so that a distance between both these antenna elements necessarily becomes short, as compared with an operating wavelength. If the distance between both the two antenna elements becomes short, as compared with the operating wavelength (wavelength of wireless signal under use), then electromagnetic mutual effects occurred between both the antenna elements are emphasized, so that antenna performance is deteriorated. Conventionally, in order to solve the above-explained problem, a method for terminating such an antenna element which is not under used by a specific impedance is employed. This impedance terminating method may be advantageously employed a switching diversity system operated in such a manner that any one of two antenna elements is selected.

Patent Publication 1: JP-A-3-280625
Patent Publication 2: JP-A-2005-6097

### Disclosure of the Invention

### Problems that the Invention is to Solve

However, in the case of synthesizing diversity systems where two sets of antenna elements are used at the same time, the below-mentioned problem occurs. That is, in the synthesizing diversity systems, both the two antenna elements are continuously terminated by impedances of a wireless circuit, so that deteriorations of antenna performance caused by electromagnetic mutual effects between both the antenna elements can be hardly reduced.

Also, for instance, when such an antenna is assumed which is mounted on a portable telephone capable of receiving terrestrial digital TV/sound broadcasting programs, in order to receive the terrestrial digital TV/sound broadcasting programs, since operating wavelengths as to the above-described antenna are approximately 40 to 70 cm, namely, are longer than a housing dimension of a general-purpose portable telephone. Accordingly, in order to achieve high antenna performance, a large-sized projection type antenna such as an external mounting type whip antenna is necessarily required to be mounted as antenna elements on the portable telephone. However, in such a case that the diversity system is applied, since two sets of large-sized projection type antennas are mounted on a portable telephone, there is such a problem that a designing characteristic and an operative characteristic of the diversity type portable telephone are deteriorated.

The present invention is made to solve the above-described problem, and therefore, has an object to provide a portable wireless unit capable of suppressing a deterioration of antenna performance, which is caused by electromagnetic mutual effects occurred between two antenna elements, and capable of achieving an improving effect of a high diversity gain, and also capable of realizing a designing characteristic and an operative characteristic in a compatible manner.

### Means for solving the Problem

A portable wireless unit, according to the present invention, is featured by such a portable wireless unit having a first housing and a second housing, comprising: a hinge portion for coupling the first housing with the second housing in a pivotable manner while axes along two different directions are set as a center; a first antenna element provided so that that the first antenna element is externally projected from the second housing; a circuit board having a ground pattern and provided in the second housing; a first power feeding terminal for connecting the circuit board to the first antenna element; a second antenna element provided with the first housing, and including the hinge portion as a portion of an antenna element, and which constitutes a dipole antenna in combination with the ground pattern of the circuit board; a second power feeding terminal for connecting the circuit board to the hinge portion; and a diversity receiving section for acquiring an output of the first antenna element via the first power feeding element, and for acquiring an output of the second antenna element via the second power feeding terminal to perform a diversity receiving operation based upon the acquired outputs of the first and second antenna elements.

With employment of the above-described structure, the improvement effect of the high diversity gain can be obtained, and further, the antenna externally projected from the housing is only the first antenna element, so that the designing characteristic and the operative characteristic are not deteriorated.

Also, in the portable wireless unit of the present invention, the first antenna element is a monopole antenna which is projected from a portion of the second housing.

With employment of the above-described structure, there is no possibility that the designing characteristic and the operative characteristic are deteriorated.

Also, in the portable wireless unit of the present invention, the first power feeding terminal and the second power feeding termina are arranged so as to be separated from each other.

With employment of the above-described structure, lowering of the antenna performance caused by the electromagnetic mutual effect occurred between both the antenna elements can be suppressed.

Also, in the portable wireless unit of the present invention, an interval between the first power feeding terminal and the second power feeding terminal is longer than or equal to 1/20 of an operating wavelength of the first antenna element and the second antenna element.

With employment of the above-described structure, lowering of the antenna performance caused by the electromagnetic mutual effect occurred between both the antenna elements can be suppressed.

Also, in the portable wireless unit of the present invention, the hinge portion can set that both a longitudinal direction of the first housing and a direction of the first antenna element are set to be approximately 90 degrees with respect to a longitudinal direction of the second housing.

With employment of the above-explained structure, the improvement effect of the high diversity gain can be obtained.

Also, in the portable wireless unit of the present invention, the first antenna element has a pivotable portion capable of setting the direction of the first antenna element to be an angle of approximately 90 degrees with respect to the longitudinal direction of the first housing.

With employment of the above-explained structure, the improvement effect of the high diversity gain can be obtained.

### Advantage of the Invention

In accordance with the portable wireless unit of the present invention, the deteriorations of the antenna performance caused by the electromagnetic mutual effect occurred between two sets of the antenna elements can be suppressed, and the improvement effect of the high diversity gain can be achieved while the designing characteristic and the operative characteristic can be maintained in the compatible manner.

### Brief Description of the Drawings

Fig. 1 is a diagram for showing a schematic structure of a portable wireless unit according to an embodiment 1 of the present invention.
Fig. 2 is a diagram for indicating a rotation condition of an upper case of the portable wireless unit according to the embodiment 1 of the present invention.
Fig. 3 is a diagram for representing an actual use condition of the portable wireless unit according to the embodiment 1 of the present invention.
Fig. 4 is a diagram for indicating a polarization ratio of the portable wireless unit according to the embodiment 1 of the present invention.
Fig. 5 is a diagram for showing a schematic structure of a portable wireless unit according to an embodiment 2 of the present invention.
Fig. 6 is a diagram for representing an actual use condition of the portable wireless unit according to the embodiment 2 of the present invention.
Fig. 7 is a diagram for indicating a polarization ratio of the portable wireless unit according to the embodiment 2 of the present invention.

### Description of Reference Numerals and Signs

- 1: upper case
- 2: lower case
- 3: hinge portion
- 4, 4A: whip antenna
- 5: whip holder
- 6: bending portion
- 7, 20: power feeding terminal
- 8: circuit board
- 9, 10: rod-shaped conductor
- 11, 22: matching circuit
- 12: display device
- 13: metal frame
- 14, 17: hinge metal fitting
- 15, 21: mounting screw
- 16, 18: rotation shaft
- 19: seat metal fitting
- 23, 24: wireless circuit
- 25: signal synthesizing unit
- 26: diversity receiving section
- 31, 31A portable: wireless unit

### Best Mode for Carrying Out the Invention

Referring now to drawings, a detailed description is made of preferred embodiments for carrying out the present invention.

### (EMBODIMENT 1)

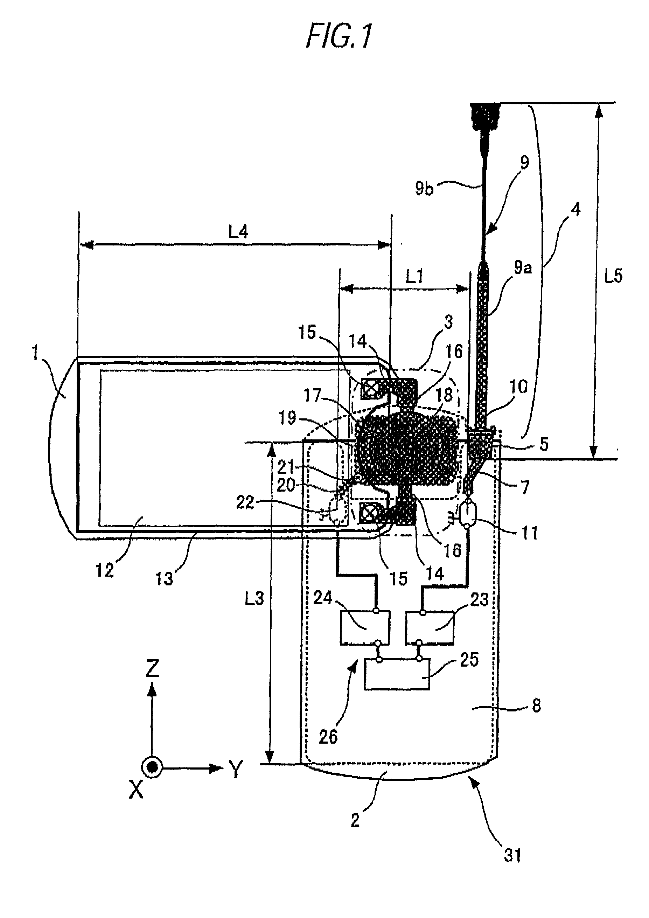

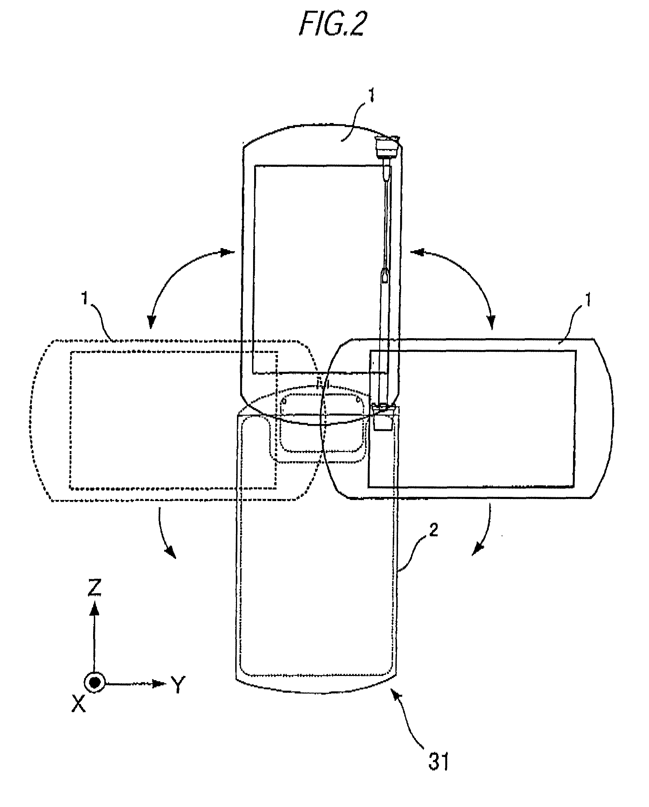

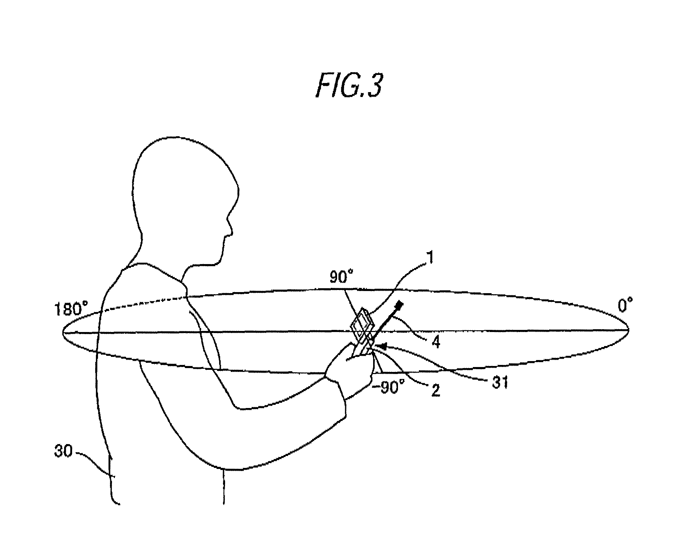

Fig. 1 is a diagram for showing a schematic structure of a portable wireless unit according to an embodiment 1 of the present invention. Also, Fig. 2 is a diagram for indicating a rotation condition of an upper case of the portable wireless unit according to the embodiment 1 of the present invention. Fig. 3 is a diagram for representing an actual use condition of the portable wireless unit according to the embodiment 1 of the present invention. The portable wireless unit according to the present embodiment is equipped with an antenna capable of receiving terrestrial digital television broadcasting programs and terrestrial digital sound broadcasting programs (frequencies thereof are approximately 470 MHz to 770 MHz). In such a case that frequency bands other than that of the terrestrial digital television broadcasting programs are received by utilizing this antenna, these frequency bands can be received by changing lengths of antenna elements. It should be noted that the antenna provided in the portable wireless unit according to the embodiment 1 may be apparently operated not only in an exclusively operable reception mode, but also in wireless communication systems in a transmission mode, or a transmission/reception mode, while equivalent effects may be expected.

In Fig. 1, the portable wireless unit 31 of the present embodiment includes an upper case (first housing) 1 and a lower case (second housing ) 2. These upper and lower cases 1 and 2 have been constituted in such a manner that while a hinge portion 3 is located at a center in a coordinate system shown in the drawing, the upper case 1 is rotated around two axes along an X direction and a Z direction. As represented in Fig. 2, styles of housings may be changed in various modes. Since the above-described mechanism is constructed, a display device 12 may be used as either a longitudinal screen or a lateral screen by way of a user desirable housing style, so that operative characteristics of the portable wireless unit 31 can be improved. It should also be understood that both the upper case 1 and the laser case 2 have been constructed of resin molded products which are made of insulating materials.

A whip holder 5 is mounted on one edge portion of the lower case 2 on the side of the hinge portion 3. A through hole is formed in this whip holder 5; a rod-shaped conductor 10 corresponding to a structural element of a whip antenna (first antenna element) 4 is inserted into this through hole; and a main body of the whip antenna 4 is supported by the whip holder 5 in a freely insertable/extractable manner. The whip antenna 4 is constituted by the rod-shaped conductor 10 and another rod-shaped conductor 9. The rod-shaped conductor 9 is constructed of a first conductor potion 9a, and a second conductor portion 9b. The first conductor portion 9a has a substantially same diameter as that of the rod-shaped conductor 10. The second rod-shaped conductor 9b has a diameter which is smaller than the diameter of the first rod-shaped conductor 9a, and can be stored into the first conductor portion 9a, and also, can be extracted from the first conductor portion 9a.

A power feeding terminal (first power feeding terminal) 7 is engage-fitted to the whip holder 5 so as to be supported thereon. The above-described power feeding terminal 7 is connected to a matching circuit 11 provided on a circuit board 8 arranged within the lower case 2 by employing, for example, a spring contact manner, or a soldering manner. The circuit board 8 is such a printed circuit board having a long edge whose length "L3" is 90 mm, on which circuit components capable of realizing various sorts of functions of the portable wireless unit 31 according to the present embodiment have been mounted, while a ground pattern (not shown) which becomes the ground potential of the circuits is formed on a substantially entire surface of the circuit board 8. It should also be understood that the power feeding terminal 7, the whip holder 5, the rod-shaped conductor 10, a bending portion 6, and the rod-shaped conductor 9 have been made of metal materials having electric conductivities, and have been manufactured in such a manner that these structural components can be electrically conducted to each other at contact points among these structural components. As a consequence, the matching circuit 11 is electrically connected to the whip antenna 4. The matching circuit 11 is connected via a conductor pattern formed on the circuit board 8 to a wireless circuit 23, and a signal synthesizing unit 25.

A metal frame (second antenna element) 13 is mounted on a plane of the upper case 1, on which the display device 1 is arranged. Generally speaking, such a metal having a high electric conductivity and a high strength, whose weight is light, is employed as the metal frame 13, for instance, a magnesium alloy is employed. As a result, the metal frame 13 may secure the strength of the slim-shaped upper case 1, and may also be operated as the antenna element. Generally speaking, a length "L4" of a long edge of the metal frame 13 is approximately 90 mm. Generally speaking, it should also be noted that although makeup-purpose coating is made on an outer decoration plane of the metal frame 13, explanations thereof will be omitted.

Since both the metal frame 13 and hinge metal fittings 14 are mounted in screw holes formed in the upper case 1 by mounting screws 15, the metal frame 1 is electrically connected to the hinge metal fitting 14, and the upper case 1 is mechanically fixed with the hinge metal fittings 14. The hinge metal fittings 14 are coupled to a hinge metal fitting 17 in such a manner that both the hinge metal fittings 14 and the hinge metal fitting 17 can be rotated by a rotation shaft 16, while a Z direction defined in the coordinate system shown in Fig. 1 is employed as an axis. The hinge metal fitting 17 is a metal molded product having an electric conductivity and a cylindrical shape, while the rotation shaft 16 is mechanically fitted to an outer circumferential plane of this hinge metal fitting 17.

While a fitting hole is formed in the hinge metal fitting 17, the rotation shaft 16 is inserted into this fitting hole, and is rotated, so that the upper case 1 is rotated with respect to the hinge metal fitting 17, while the Z axis is set as the center. The hinge metal fitting 17 and the seat metal fitting 19 are coupled to each other in such a manner that both the hinge metal fitting 17 and the seat metal fitting 19 can be rotated by the rotation axis 18, while the X direction is defined as an axis. While the hinge metal fitting 14, the rotation shaft 16, the hinge metal fitting 17, the rotation shaft 18, and the seat metal fitting 19, which correspond to structural elements of the hinge portion 3, have been made of metals having electric conductivities, these structural elements of the hinge portion 3 have been arranged in such a manner that these structural elements are electrically conducted at contact points among these structural elements. As a result, the metal frame 13 is electrically connected to the seat metal fitting 19.

Since the seat metal fitting 19 and the power feeding terminal (second power supplying terminal) 20 are mounted by a mounting screw 21 in a screw hole formed in the lower case 2, the metal frame 13 and the seat metal fitting 19 are electrically connected to each other, and the seat metal fitting 19 is mechanically fixed on the lower case 2. The power feeding terminal 20 is arranged on one edge side of the lower case 2, which is the different edge side from the whip holder 5, by being separated from the power feeding terminal 7 over a distance of "L1" (for example, 40 mm). This power feeding terminal 20 is connected to the matching circuit 22 provided on the circuit board 8 in, for example, a spring contact manner, or a soldering manner.

As previously described, since the interval between the power supply terminals 7 and 20 of these two different antennas, a radiation efficiency of each of these two antennas in a free space is increased higher than, or equal to 2 dB, as compared with the radiation efficiency obtained in such a case that the power supply terminals of the two antennas are arranged at one edge portion of the lower case 2, which could be confirmed based upon experiments performed by the Inventors of the present invention. The matching circuit 22 is connected via a conductor pattern formed on the circuit board 8 to a wireless circuit 24 and also to the signal synthesizing unit 25.

It should also be understood that the wireless circuits 23 and 24, and the signal synthesizing circuit 25 constitute a diversity receiving section 26.

In the portable wireless unit 31 constructed in the above-described structure, the whip antenna 4 may be operated as a monopole antenna having a length "L5" (for instance, 130 mm), which is projected from the lower case 2. Then, such a function capable of matching an impedance of the whip antenna 4 with an input impedance (generally speaking, 75 ohms) of the wireless circuit 23 is achieved by the matching circuit 11. Main polarization of the whip antenna 4 which is operated as the monopole antenna is located parallel to the axis of the whip antenna 4. Also, both the metal frame 13 and the hinge portion 3 are operated as an upper-sided antenna element (whose length is, for example, 120 mm), such a function capable of matching an impedance of this upper-sided antenna element with an input impedance (generally speaking, 50 ohms) of the wireless circuit 24 is achieved by the matching circuit 22. Further, the ground pattern formed on the circuit board 8, which has a length "L3" (for example, 90 mm), is operated as a lower-sided antenna element. In other words, both the upper-sided antenna element which is constructed of the metal frame 13 and the hinge portion 3, and the lower-sided antenna element of the ground pattern formed on the circuit board 8 are operated as the dipole antenna. More specifically, as indicated in Fig. 3, the main polarization of the above-described dipole antenna is located parallel to the longitudinal dimension and the upper case 1 under such a television viewing condition that while a user 30 actually grips the lower case 2, the user 30 views a television screen.

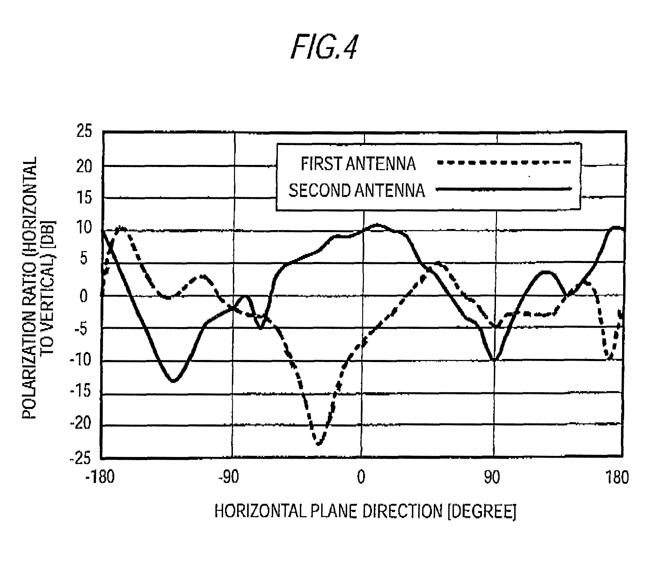

Fig. 4 is a graph which graphically represents a polarization ratio with respect to a radiation direction of a horizontal plane in such a case that the whip antenna 4 is located parallel to the longitudinal direction of the lower case 2 and the longitudinal direction of the upper case 1 is set vertically under the television viewing condition as shown in Fig. 3. It should also be understood that a first antenna described in Fig. 4 corresponds to the above-described whip antenna 4, and a second antenna corresponds to the dipole antenna which is constituted by the metal frame 13, the hinge portion 3, and the ground pattern of the circuit board 8. An abscissa of the graph represented in Fig. 4 corresponds to the radiation direction angle of the horizontal plane described in Fig. 3, whereas an ordinate thereof indicates that vectors of polarization are divided into a horizontal vector component and a vertical vector component, a difference with respect to the vertical vector component is indicated, while the horizontal vector component is defined as a reference. In other words, if the value of the polarization ratio is large, then this graph represents that the horizontal vector component becomes large along this direction. Also, in such a case that a difference between polarization ratios of two antennas is large along each of the respective directions, this graph represents that main polarization is largely different, and a polarization diversity effect is increased. As apparent from this result, under the television viewing condition shown in Fig. 3, the following fact can be confirmed. That is, in particular, the higher polarization diversity effect can be achieved along a front view direction of the human body.

As previously described, in the portable wireless unit 31 of the present embodiment, the power feeding terminals 7 and 20 of the two antennas are arranged in such a manner that these power feeding terminals 7 and 20 are located at both edges of the lower case 2 with respect to the width direction of the lower case 2 so as to increase the interval between these power feeding terminals 7 and 20. As a result, lowering of the antenna performance caused by the electromagnetic mutual effect can be suppressed. In this case, the radiation efficiency of each of these two antennas in the free space is increased higher than, or equal to 2 dB, as compared with the radiation efficiency obtained in such a case that the power feeding terminals of the two antennas are merely arranged at one edge portion of the lower case 2, which could be confirmed based upon experiments performed by the Inventors of the present invention.

Moreover, as represented in Fig. 3, in such a case that the longitudinal direction of the upper case 1 is intersected perpendicular to the axis of the whip antenna 4, the polarization diversity effect can be achieved. As a result, the reception sensitivity can be increased higher than, or equal to 2 dB, which could be confirmed by experiments performed by the Inventors of the present invention. Also, in view of an outer appearance, as to an antenna element, only one antenna element projected from the housing is provided. As a result, while the designing characteristic and the operative characteristic of the portable wireless unit are not deteriorated, the improvement effect of the high diversity gain, and both the designing characteristic and the operative characteristic can be achieved in the compatible manner.

It should also be noted that although the first antenna element is defined as the whip antenna 4 in the above-described embodiment, the first antenna element of the present invention may not be limited only to this whip antenna 4, but may be realized as other antennas such as a helical antenna, resulting in a similar effect. More specifically, in such a case that main polarization is located parallel to the longitudinal direction of the lower case 2, a similar polarization diversity effect may be alternatively achieved.

Also, in the present embodiment, the power feeding elements 7 and 20 of the two antenna elements have been arranged at both edge portions of the lower case 2 along the width direction thereof. However, the present invention is not limited only to this arrangement, but may be modified. For instance, if an interval between the power feeding elements 7 and 20 is longer than, or equal to A/20 (symbol "A" indicates wavelength), then lowering of the antenna performance caused by the electromagnetic mutual effect may be alternatively suppressed although there is a difference between the effect achieved by this interval and the above-described effect achieved by the arrangement at both the edge portions. This alternative arrangement could be confirmed based upon experiments performed by the Inventors of the present invention.

Also, in the present embodiment, the respective elements which constitute the hinge portion 3 have been constituted by combining the separate structural elements with each other. Alternatively, even in such a case that several structural elements among these structural elements are formed in one integral body, a similar effect may be achieved.

In the present embodiment, the second antenna element is constructed of the metal frame 13, Alternatively, even in such a case that the second antenna element is formed by employing a conductive plate arranged within the upper case 1 made of the resin, or a printed pattern formed on a printed board, high antenna performance may be achieved.

Also, in the present embodiment, although the present invention is applied to the synthesizing diversity system, the present invention may be alternatively applied to a switching diversity system.

Further, in the present embodiment, although the angle defined between the upper case 1 and the whip antenna 4 is selected to be 90 degrees, the present invention is not limited thereto. Alternatively, if the angle is selected to be larger than, or equal to 30 degrees, and also, smaller than, or equal to 150 degrees, then a similar effect may be achieved, although such a high polarization diversity effect obtained when the angle is selected to be 90 degrees cannot be achieved.

### (EMBODIMENT 2)

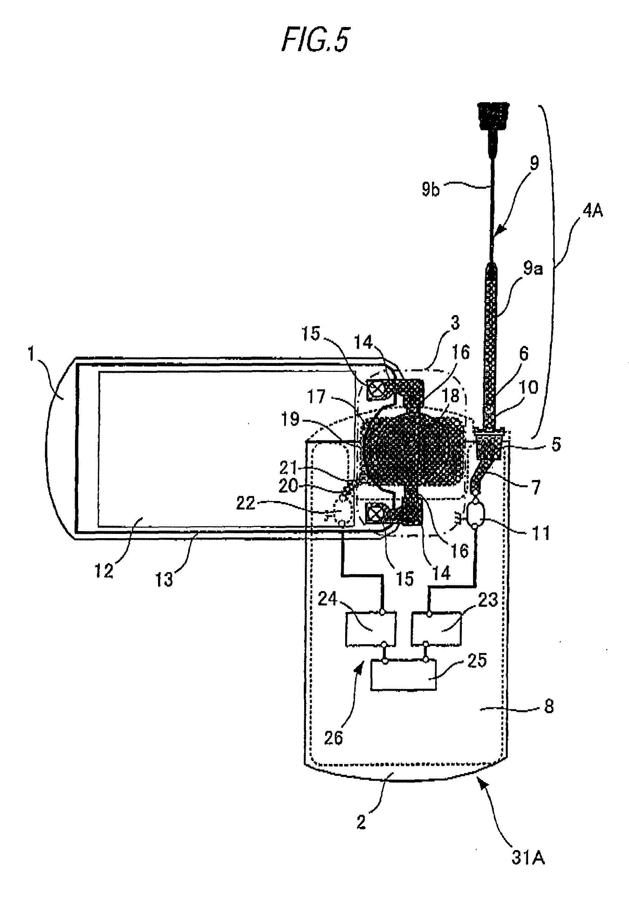

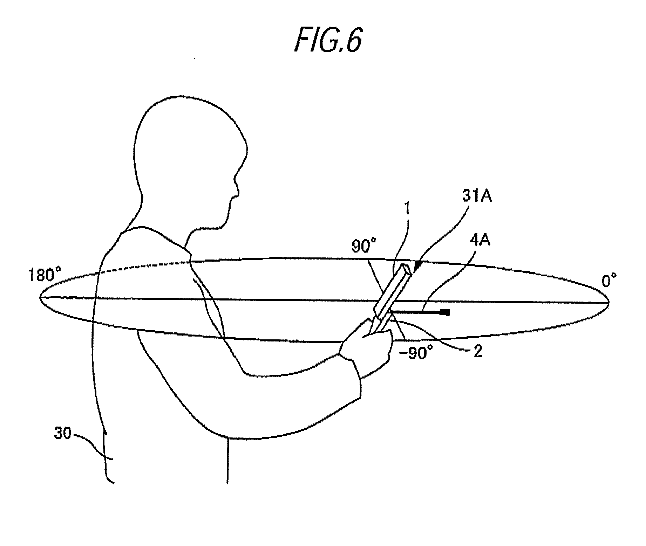

Fig. 5 is a diagram for showing a schematic structure of a portable wireless unit according to an embodiment 2 of the present invention. It should be understood that the same reference numerals shown in Fig. 1 will be employed as those for denoting similar structural elements indicated in Fig. 5, and explanations thereof will be omitted. Although a portable wireless unit 31A according to this embodiment 2 has a similar structure to that of the portable wireless unit 31 described in the embodiment 1, the portable wireless unit 31A has the below-mentioned different structures. That is, while a whip antenna 4A is constituted by a rod-shaped conductor 10, another rod-shaped conductor 9, and a bending portion (pivotable portion) 6, both the rod-shaped conductor 10 and the rod-shaped conductor 9 can be rotated around the bending portion 6 located as a center. With employment of the above-described structure, a bending angle of the whip antenna 4A can be adjusted in addition to the adjustment of the rotation angle of the upper case 1 with respect to the lower case 2. Fig. 6 is a diagram for representing a television viewing condition of the portable wireless unit 31A according to the present embodiment 2. In this drawing, a longitudinal direction of the lower case 2 is set parallel to a longitudinal direction of the upper case 1, and an axis of the whip antenna 4A is set in the horizontal direction.

In the portable wireless unit 31A with employment of the above-described structure, even in such a case that the rotation angle between the upper case 1 and the lower case 2, which is realized by the hinge portion 3 having the 2-axis hinge mechanism, is different from the rotation angle of the embodiment 1, since the bending angle of the whip antenna 4A can be adjusted, the improvement effect of the high diversity gain can be achieved. Also, similar to the embodiment 1, the power feeding terminals 7 and 20 of the two antennas are arranged in such a manner that these power feeding terminals 7 and 20 are located at both edges of the lower case 2 with respect to the width direction of the lower case 2 so as to increase the interval between these power feeding terminals 7 and 20. As a result, a radiation efficiency of each of these two antennas in a free space is increased higher than, or equal to 2 dB, as compared with the radiation efficiency obtained in such a case that the power feeding terminals of the two antennas are merely arranged at one edge portion of the lower case 2.

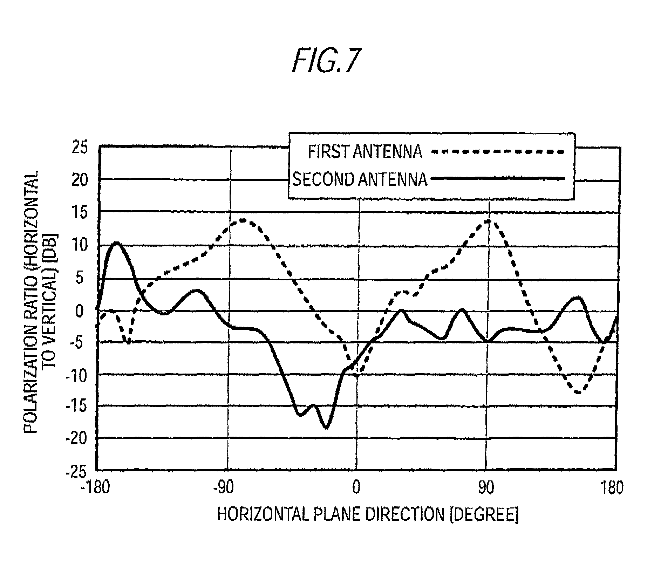

Fig. 7 is a graph which graphically represents a polarization ratio with respect to a radiation direction of a horizontal plane in such a case that the whip antenna 4A is located in the horizontal direction, and the longitudinal direction of the upper case 1 is located parallel to the longitudinal direction of the lower case 2 under the television viewing condition as shown in Fig. 6. It should also be understood that a first antenna described in Fig. 7 corresponds to the above-described whip antenna 4A, and a second antenna corresponds to the dipole antenna which is constituted by the metal frame 13, the hinge portion 3, and the ground pattern of the circuit board 8. An ordinate and an abscissa of the graph indicated in Fig. 7 are defined in a similar manner to that of the graph shown in Fig. 4. As apparent from this result, under the television viewing condition shown in Fig. 6, the following fact can be confirmed. That is, in particular, the higher polarization diversity effect can be achieved along a front view direction (-90 degrees and 90 degrees) of the human body.

As previously described, in accordance with the portable wireless unit 31A of the present embodiment, even in such a case that the rotation angle between the upper case 1 and the lower case 2, which is realized by the hinge portion 3 having the 2-axis hinge mechanism, is different from the rotation angle of the embodiment 1, since the bending angle of the whip antenna 4A can be adjusted, the improvement effect of the high diversity gain can be achieved. More specifically, in such a case that the axis of the whip antenna 4 as shown in Fig. 6 is located in the horizontal direction, and the longitudinal direction of the upper case 1 is located parallel to the longitudinal direction of the lower case 2, the polarization diversity effect can be achieved, and the reception sensitivity can be increased higher than, or equal to 2 dB, which could be confirmed by the experiments performed by the Inventors of the present invention.

Also, since the power feeding terminals 7 and 20 of the two antennas are arranged in such a manner that these power feeding terminals 7 and 20 are located at both edges of the lower case 2 with respect to the width direction of the lower case 2 so as to increase the interval between these power feeding terminals 7 and 20, lowering of the antenna performance caused by the electromagnetic mutual effect can be suppressed, and thus, the radiation efficiency of each of these two antennas in the free space can be increased higher than, or equal to 2 dB. Also, in view of an outer appearance, as to an antenna element, only one antenna element projected from the housing is provided. As a result, the designing characteristic and the operative characteristic of the portable wireless unit are not deteriorated.

It should also be noted that although the first antenna element is defined as the whip antenna in the above-described embodiment, the first antenna element of the present invention may not be limited only to this whip antenna 4, but may be realized as other antennas such as a helical antenna, resulting in a similar effect. More specifically, in such a case that main polarization is located parallel to the longitudinal direction of the lower case 2, a similar polarization diversity effect may be alternatively achieved.

Also, in the present embodiment, the power feeding elements 7 and 20 of the two antenna elements have been arranged at both edge portions of the lower case 2 along the width direction thereof. However, the present invention is not limited only to this arrangement, but may be modified. For instance, if an interval between the power feeding elements 7 and 20 is longer than, or equal to λ/20 (symbol "λ" indicates wavelength), then lowering of the antenna performance caused by the electromagnetic mutual effect may be alternatively suppressed although there is a difference between the effect achieved by this interval and the above-described effect achieved by the arrangement at both the edge portions. This alternative arrangement could be confirmed based upon experiments performed by the Inventors of the present invention.

In the present embodiment, the second antenna element is constructed of the metal frame 13. Alternatively, even in such a case that the second antenna element is formed by employing a conductive plate arranged within the upper case 1 made of the resin, or a printed pattern formed on a printed board, high antenna performance may be achieved.

Also, in the present embodiment, although the present invention is applied to the synthesizing diversity system, the present invention may be alternatively applied to a switching diversity system.

Further, in the present embodiment, although the angle defined between the upper case 1 and the whip antenna 4 is selected to be 90 degrees, the present invention is not limited thereto. Alternatively, if the angle is selected to be larger than, or equal to 30 degrees, and also, smaller than, or equal to 150 degrees, then a similar effect may be achieved, although such a high polarization diversity effect obtained when the angle is selected to be 90 degrees cannot be achieved.

While the present invention is described in detail, or with reference to the specific embodiments, it is apparent to the ordinarily skilled engineers who can conceive that the present invention may be modified and changed in various manners without departing from the technical scope and spirit of the present invention.

### Industrial Applicability

The present invention can have such effects that the deteriorations of the antenna performance caused by the electromagnetic mutual effect occurred between the two antenna elements can be suppressed, the improvement effect of the high diversity gain, and both the designing characteristic and the operative characteristic can be obtained in the compatible manner. Also, the present invention can be applied to portable telephones and the like, which are capable of receiving terrestrial digital television broadcasting programs and terrestrial digital sound broadcasting programs.

## Claims

1. A portable wireless unit having a first housing and a second housing, comprising:
a hinge portion which couples the first housing with the second housing in a pivotable manner while axes along two different directions are set as a center;
a first antenna element which is provided so that the first antenna element is externally projected from the second housing;
a circuit board which has a ground pattern and is provided in the second housing;
a first power feeding terminal which connects the circuit board to the first antenna element;
a second antenna element which is provided in the first housing, and includes the hinge portion as a portion of an antenna element, and which constitutes a dipole antenna in combination with the ground pattern of the circuit board;
a second power feeding terminal which connects the circuit board to the hinge portion; and
a diversity receiving section which acquires an output of the first antenna element via the first power feeding element and acquires an output of the second antenna element via the second power feeding terminal to perform a diversity receiving operation based upon the acquired outputs of the first and second antenna elements.

2. The portable wireless unit according to claim 1, wherein the first antenna element is a monopole antenna which is projected from a portion of the second housing.

3. The portable wireless unit according to claim 1 or claim 2, wherein the first power feeding terminal and the second power feeding terminal are arranged so as to be separated from each other.

4. The portable wireless unit according to any one of claim 1 to claim 3, wherein an interval between the first power feeding terminal and the second power feeding terminal is longer than or equal to 1/20 of an operating wavelength of the first antenna element and the second antenna element.

5. The portable wireless unit according to any one of claim 1 to claim 4, wherein the hinge portion can set that both a longitudinal direction of the first housing and a direction of the first antenna element are set to be approximately 90 degrees with respect to a longitudinal direction of the second housing.

6. The portable wireless unit according to any one of claim 1 to claim 5, wherein the first antenna element has a pivotable portion capable of setting the direction of the first antenna element to be an angle of approximately 90 degrees with respect to the longitudinal direction of the first housing.

## Amended claims

### Amended claims under Art. 19.1 PCT

**1.** A portable wireless unit having a first housing and a second housing, comprising:
a hinge portion which couples the first housing with the second housing in a pivotable manner while axes along two different directions are set as a center;
a first antenna element which is provided so that the first antenna element is externally projected from the second housing;
a circuit board which has a ground pattern and is provided in the second housing;
a first power feeding terminal which connects the circuit board to the first antenna element;
a second antenna element which is provided in the first housing, and includes the hinge portion as a portion of an antenna element, and which constitutes a dipole antenna in combination with the ground pattern of the circuit board;
a second power feeding terminal which connects the circuit board to the hinge portion and is arranged so as to be separated from the first power feeding terminal; and
a diversity receiving section which acquires an output of the first antenna element via the first power feeding element and acquires an output of the second antenna element via the second power feeding terminal to perform a diversity receiving operation based upon the acquired outputs of the first and second antenna elements.

**2.** The portable wireless unit according to claim 1, wherein an interval between the first power feeding terminal and the second power feeding terminal is longer than or equal two 1/20 of an operating wavelength of the first antenna element and the second antenna element.

**3.** The portable wireless unit according to claim 1 or claim 2, wherein the first antenna element is a monopole antenna which is projected from a portion of the second housing.

**4.** The portable wireless unit according to any one of claim 1 to claim 3, wherein the hinge portion can set that both a longitudinal direction of the first housing and a direction of the first antenna element are set to be approximately 90 degrees with respect to a longitudinal direction of the second housing.

**5.** The portable wireless unit according to any one of claims 1 to claim 4, wherein the first antenna element has a pivotable portion capable of setting the direction of the first antenna element to an angle of approximately 90 degrees with respect to the longitudinal direction of the first housing.
